# EUROPEAN PATENT APPLICATION

(11) **EP 1 320 100 A2**
(43) Date of publication of application: **18.06.2003**
(21) Application number: 02028268.7
(22) Date of filing: 16.12.2002
(51) Int. Cl.: G11B 27/036, H04N 5/85, H04N 5/926

(54) **Editing apparatus and method**

(30) Priority: 17.12.2001 JP 2001383377
(71) Applicant: Kabushiki Kaisha Toshiba, Tokyo (JP)
(72) Inventor: Shibutani, Manabu, Kabushiki Kaisha Toshiba, Tokyo 105-8001 (JP)
(74) Representative: Henkel, Feiler, Hänzel

(57) **Abstract**

Upon editing video data recorded as an MPEG program stream, the process is done for each reference picture (for three frames). That is, information of the end of a stream to be left is input (S1), a reference picture in a GOP, which corresponds to the information of the end, is determined (S2), and a picture immediately before the determined reference picture is judged as the last picture of the stream to be left (S3).

## Description

The present invention relates to a video data editing apparatus and, more particularly, to an editing apparatus for editing an MPEG program stream.

In recent years, moving image compatible optical disk playback apparatuses that play back optical disks recorded with video data, audio data, and the like have been developed. Of such apparatuses, the DVD standard that uses internationally standardized MPEG2 and adopts AC3 audio compression is specified. This standard supports MPEG2 as a moving image compression method, and also AC3 audio compression and MPEG audio compression as audio compression methods in accordance with the MPEG2 system layer.

As the standards for media themselves, the DVD-RAM standard (4.7GB) has been established following the DVD-ROM standard as DVD-video media, and DVD-RAM drives are beginning to prevail as computer peripheral devices.

Furthermore, the DVD video standard that implements a system which allows real-time information recording/playback processes using a DVD-RAM, i.e., the DVD-VR (Video Recording) standard has been developed, and products complying with this standard are commercially available.

In a case of editing a datastream that contains video data compressed by MPEG2, i.e., an MPEG program stream, an editing processes for deleting a trailing part of a recorded stream and an editing process for extracting a part of a stream, which are designated by the user, are normally done for respective GOPs.

It is because in a case of editing for respective GOPs, the aforementioned processes can be implemented by simply deleting or extracting a stream at a delimiter of data of GOPs. When an editing process for respective frames, which can assure higher precision, is required, data is often re-encoded.

However, each GOP unit is around 0.5 sec as a normal display time, and has an error from the user's designated time. The re-encode process is time-consuming, and deteriorates image quality.

It is an embodiment of the present invention to edit a stream by making an end of a stream, which is to be left in the editing process for deleting a trailing part of a stream, or an end of a stream, which is extracted in the editing process for extracting a part of a stream, closer to the user's designated time than in a conventional method.

In order to achieve the above object, an editing apparatus according to an embodiment of the present invention is directed to an editing apparatus for editing video data recorded as a program stream, comprising an input unit configured to input information of an end of a stream to be left in an editing process, a determination unit configured to determine a reference picture, which corresponds to the information of the end input by the input unit, a judgment unit configured to judge a picture immediately before the reference picture determined by the determination unit as a last picture of the stream to be left, and an editing unit configured to edit the video data using the judgment result of the judgment unit.

Therefore, when editing an MPEG program stream, the end of a stream can be cut for respective pictures (frames) in video data according to a given condition, and for respective access units in audio data.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the arrangement of a video recording/playback apparatus as an editing apparatus to which the present invention is applied;
FIG. 2 shows the directory structure of DVD video and audio files to be applied to the video recording/playback apparatus shown in FIG. 1;
FIG. 3 shows the file structure of a movie video file and still picture video file;
FIG. 4 is a view for explaining a GOP;
FIG. 5 is a view showing the format of a picture and editing points;
FIG. 6 is a flow chart showing the editing operation according to an embodiment of the present invention;
FIG. 7 shows the relationship between packs and pictures;
FIGS. 8A and 8B show packs before and after a stuffing process;
FIGS. 9A and 9B show packs before and after a padding process;
FIG. 10 is a flow chart showing a pack editing method;
FIG. 11 shows the format of a video packet;
FIG. 12 shows the format of a padding packet;
FIG. 13 shows the format of a provider defined pack; and
FIGS. 14A to 14D show the pack configurations of streams before and after editing.

A preferred embodiment of the present invention will be described in detail hereinafter with reference to the accompanying drawings.

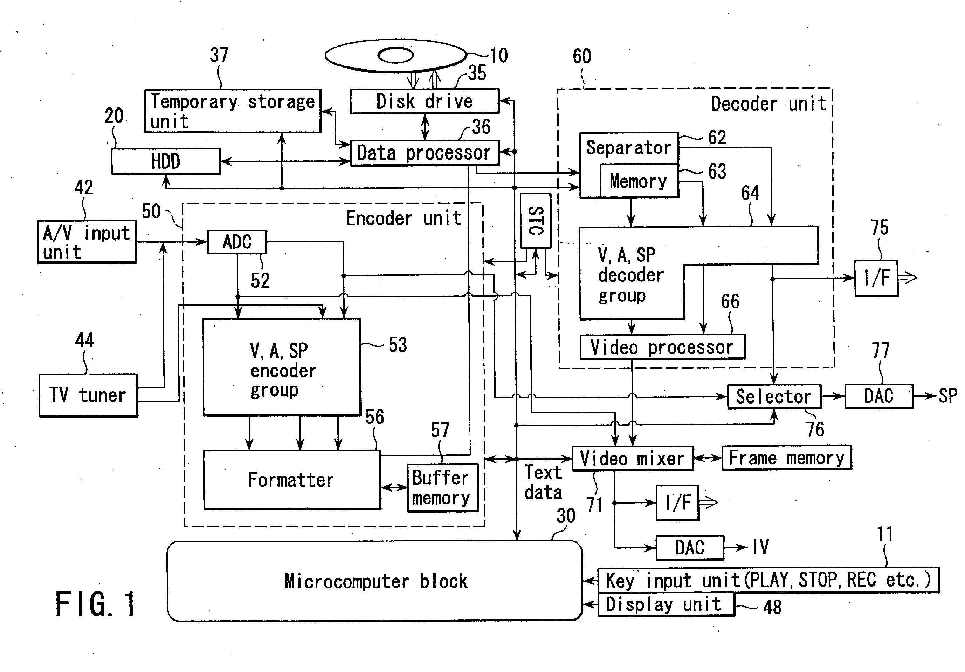

FIG. 1 is a block diagram showing the arrangement of a video recording/playback apparatus as an editing apparatus to which the present invention is applied. This video recording/playback apparatus comprises, as major components, a hard disk drive (HDD) 20, a disk drive 35 which rotates an optical disk 10 as an information storage medium on which a video file can be formed, and executes information read/write accesses to this optical disk 10, an encoder unit 50 that forms the video recording side, a decoder unit 60 that forms the playback side, and a microcomputer block 30 for controlling the operation of the whole apparatus.

The encoder unit 50 comprises an ADC (analog-to-digital converter) 52, an encoder group 53 which includes a V (video) encoder, A (audio) encoder, and SP (sub-picture) encoder, a formatter 56 for formatting the outputs from these encoders to obtain a predetermined format, and a buffer memory 57.

The ADC 52 receives an external analog video signal + external analog audio signal from an AV input unit 42, or an analog TV signal + analog audio signal from a TV (television) tuner 44.

A data processor 36 supplies DVD recording data output from the encoder unit 50 to the disk drive 35, receives a DVD playback signal played back from the optical disk 10 from the disk drive 35, rewrites management information recorded on the optical disk 10, and deletes data recorded on the optical disk 10 under the control of the microcomputer block 30.

The microcomputer block 30 includes an MPU (microprocessing unit), a ROM in which a control program and the like are written, and a RAM for providing a work area required to execute the program.

The MPU of the microcomputer block 30 executes an editing process, defect location detection process, unrecorded area detection process, video recording information recording position setup process, UDF recording process, AV address setup process, and the like using the RAM as a work area in accordance with a control program which is stored in the ROM and includes the present invention.

The decoder unit 60 comprises a separator 62 for separating and extracting respective packs from video information having a pack structure, a memory 63 used upon execution of pack separation and other signal processes, a decoder group 64 which includes a V decoder for decoding main picture data separated by the separator 62, an SP decoder for decoding sub-picture data separated by the separator 62, and an A decoder for decoding audio data separated by the separator 62, and a video processor 66 for appropriately synthesizing sub-picture data obtained from the SP decoder on main picture data obtained from the V decoder so as to output a main picture while superposing sub-pictures such as a menu, closed caption, and the like thereon.

When the output from the A decoder is to be digitally output, it is externally output via an interface (I/F) 75; when the output from the A decoder is to be output as an analog signal, it is converted into an analog signal by a DAC 77 via a selector 76, and the analog signal is externally output. The selector 76 selects and outputs one of the signal input from the TV tuner 44 or A/V input unit 42 via the ADC 52 and the signal input from the decoder group 64 in accordance with a select signal from the microcomputer block 30. An analog audio signal is supplied to an external component (not shown; a multi-channel stereophonic apparatus having two to six channels)

A key input unit 11 has buttons such as a playback (PLAY), stop (STOP), recording (REC), skip (Skip), fast forward (FF), rewind (Rew), slow (Slow), enter key, and the like. The user operates this video recording/playback apparatus by pressing these buttons, so as to record or play back video information on or from the HDD 20 or rewritable optical disk 10, and to edit recorded video data.

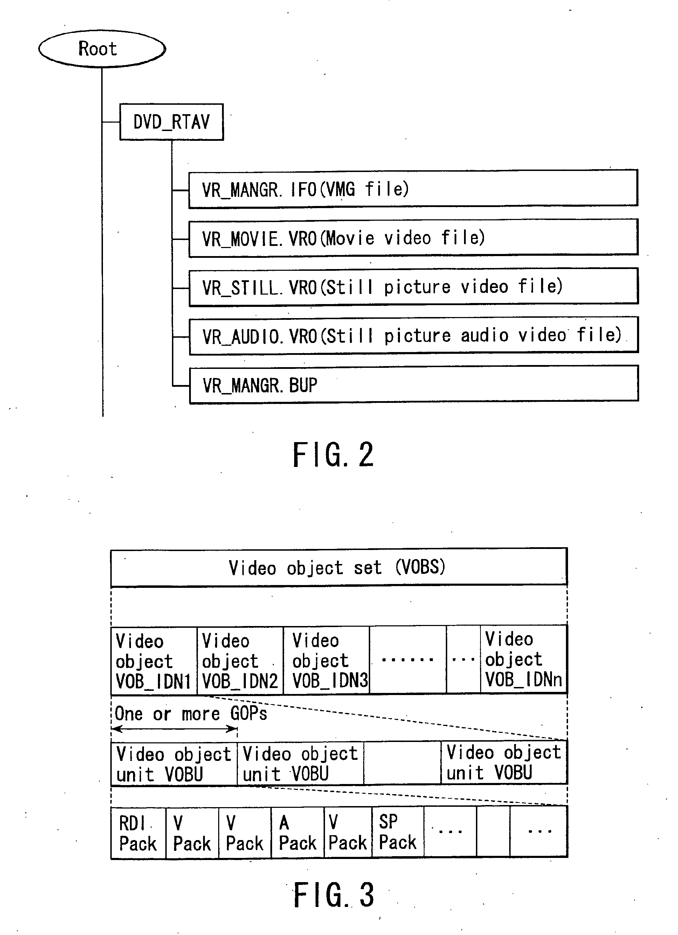

FIG. 2 shows the directory structure of video and audio files complying with the real-time recording DVD-VR standard, as an example of a DVD disk which is applied to the video recording/playback apparatus shown in FIG. 1.

In DVD standards, directories are present for respective standards, and have names "DVD_RTAV" in DVD-VR, "AUDIO_TS" in DVD-audio, and "VIDEO_TS" in DVD-video. FIG. 2 shows "DVD_RTAV". Recording data is present in each directory. Also, in the DVD, data is saved in a normal file format. A "title" corresponds to, e.g., one movie, and a plurality of titles can be recorded on a single disk.

The directory "DVD_RTAV" includes a VR_MANGR.IFO file as a video manager (VMG) file, a VR_MOVIE.VRO file as a movie video file, a VR_STILL.VRO file as a still picture video file, a VR_AUDIO.VRO file as a still picture audio file, and a VR_MANGR.BUP file as a backup file of the video manager.

The VR_MANGR.IFO file records navigation data, which navigates a program set, program, entry points, play list, and the like.

The VR MOVIE.VRO file is a so-called movie AV file used to record movie video objects (movie VOBs).

The VR_STILL.VRO file is a still picture AV file used to record still picture VOBs. This VR_STILL.VRO file is used to record original VOBs consisting of video parts that contain arbitrary sub-picture units. The original VOBs contain audio parts associated with the video parts.

The VR_AUDIO.VRO file is a still picture additional audio file used to record an additional audio stream for a still picture. This additional audio part indicates an audio stream recorded by after recording. The audio part recorded in the VR_AUDIO.VRO file is used in combination with some video parts recorded in the VR_STILL.VRO.

FIG. 3 shows the file structure of VR_MOVIE.VRO as the movie video file and VR_STILL.VRO as the still picture video file.

A video file has a hierarchical structure. One file is formed of a plurality of VOBs (video objects), one VOB is formed of a plurality of VOBUs (video object units), and one VOBU is formed of a plurality of packs. The plurality of packs include RDI packs, V packs, A packs, and the like.

A V pack is obtained by compressing video data by MPEG2, and is formed of a pack header, packet header, and video data field, as will be described later. An A pack is obtained by processing audio data by, e.g., linear PCM, MPEG, AC3, or the like, and is formed of a pack header, packet header, and audio data field, as will be described later.

In each pack, time stamps such as a PTS (presentation time stamp) indicating a playback (presentation) time, a DTS indicating a decode time, and the like are described as needed. As for a PTS of a sub-picture, a time arbitrarily delayed from a PTS of main picture data or audio data in the identical playback time range can be described. The playback time of one video object unit (VOBU) normally matches that of video data formed of one or more picture groups (groups of pictures: GOPs for short) contained in the video object unit. Normally, one GOP is around 0.5 sec in MPEG2, and stores compressed video data to play back about 15 frame images within 0.5 sec.

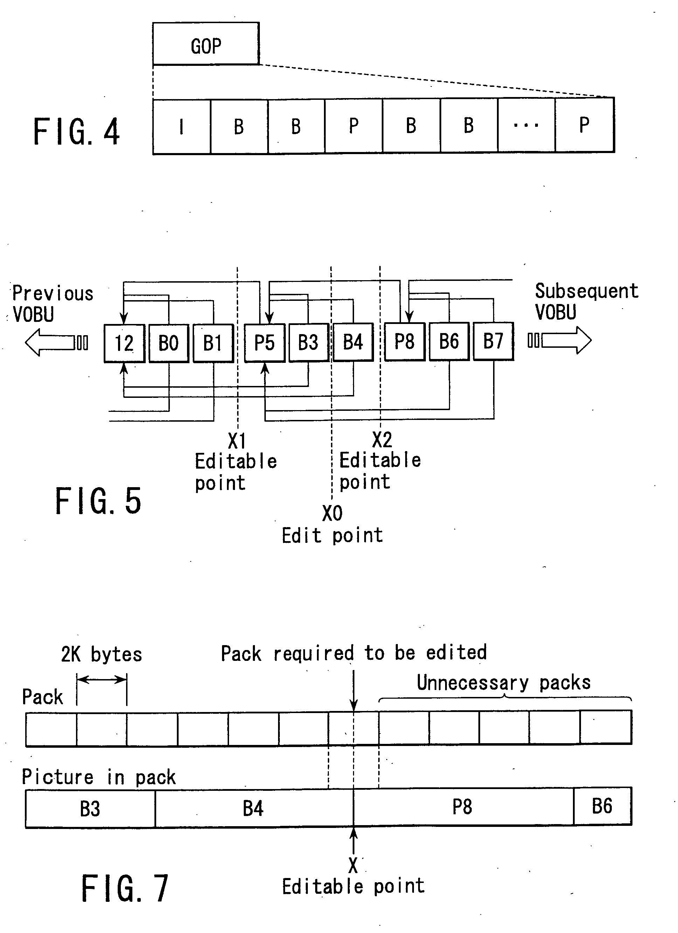

An MPEG datastream is encoded for respective GOPs, as shown in FIG. 4. Each GOP contains an intra-coded frame (I-picture), and inter-coded frames (P- and B-pictures).

The editing process of DVD-VR data according to the present invention will be described below.

When a program stream that has already recorded according to the DVD-VR standard undergoes an editing process for deleting a trailing part of a stream or an editing process for extracting a part of a stream, or when DVD-VR data is partially extracted and is converted into DVD-Video data, VOBUs are normally used as units. This is because the editing process for respective VOBUs can be implemented by directly deleting or extracting VOBU data corresponding to an editing point, and data need not undergo any complicated correction process. However, a VOBU unit is 0.5 sec as a normal display time, and the editing point that the user intended has a slight error from an actual editing point.

In the present invention, when a trailing part of a given stream is to be deleted in such an editing process, correction for respective video frames is carried out according to a given condition.

Video data will be explained below. A DVD video stream complies with a program stream specified by MPEG2. In MPEG2, three types of pictures, i.e., I-, P-, and B-pictures are used, as described above.

An I-picture can be independently decoded, while a P-picture is decoded with reference to the decode result of a previous reference picture (I- or P-picture) in the recording order, and B-picture is decoded with reference to the decode results of the immediately preceding and second preceding previous reference pictures in the recording order.

FIG. 5 shows the format of pictures and editing points. For example, I2 is the third I-picture which is played back in FIG. 5. Also, B0 is the first B-picture, which is played back in FIG. 5. In FIG. 5, a picture at the source of each arrow is decoded with reference to the decode result of a picture at the end of that arrow.

Due to this reference relationship, the recording order does not always match the playback order. The second previous reference picture, which is to be referred to by a B-picture, is played back before that B-picture, but the previous reference picture is played back after that B-picture.

Since a reference picture before a given picture is always referred to, even when some arbitrary pictures in a trailing part of a recorded stream are deleted, there are no remaining pictures having no reference pictures.

However, since the recording order does not match the playback order, some pictures may be dropped in playback. For example, when pictures after an editing point X0 in FIG. 5 are deleted, and another stream is joined to the editing point X0, pictures in FIG. 5 are played back in the order of B0, B1, I2, B3, and P5. Therefore, P5 is played back in place of B4 to be played back after B3, resulting in an unnatural playback video.

However, when a video stream starting from a reference picture (I- or P-picture) is deleted, all pictures before that reference picture are played back in a natural order. Therefore, in the present invention, pictures before a reference picture are left, and data after that reference picture are deleted. That is, editing processes such as delete, move, and the like are done for each reference picture (in units of three frames).

Audio data can be edited for respective access units. This is because the playback order always matches the recording order for each access unit. Assume that audio data undergoes'the same pack process as that for video data.

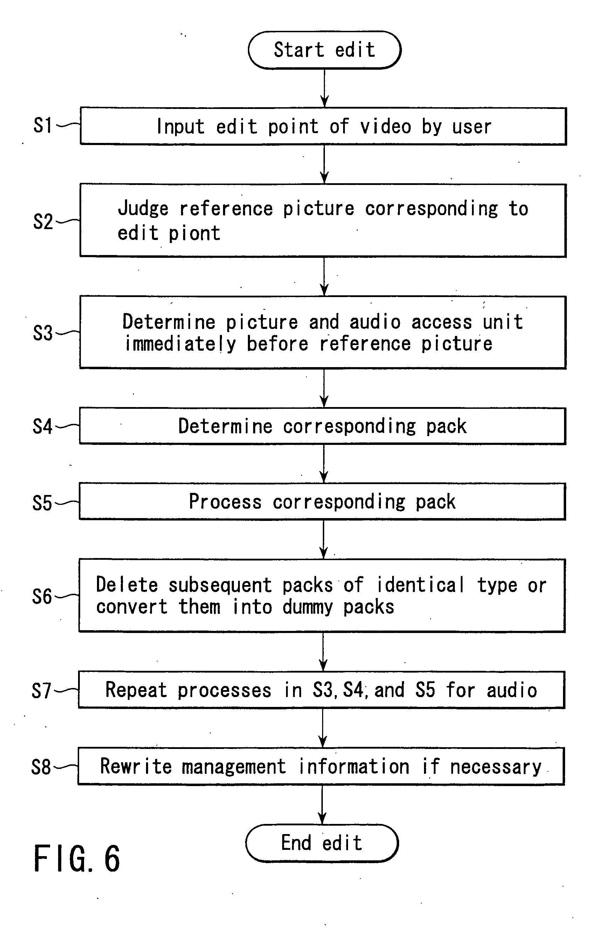

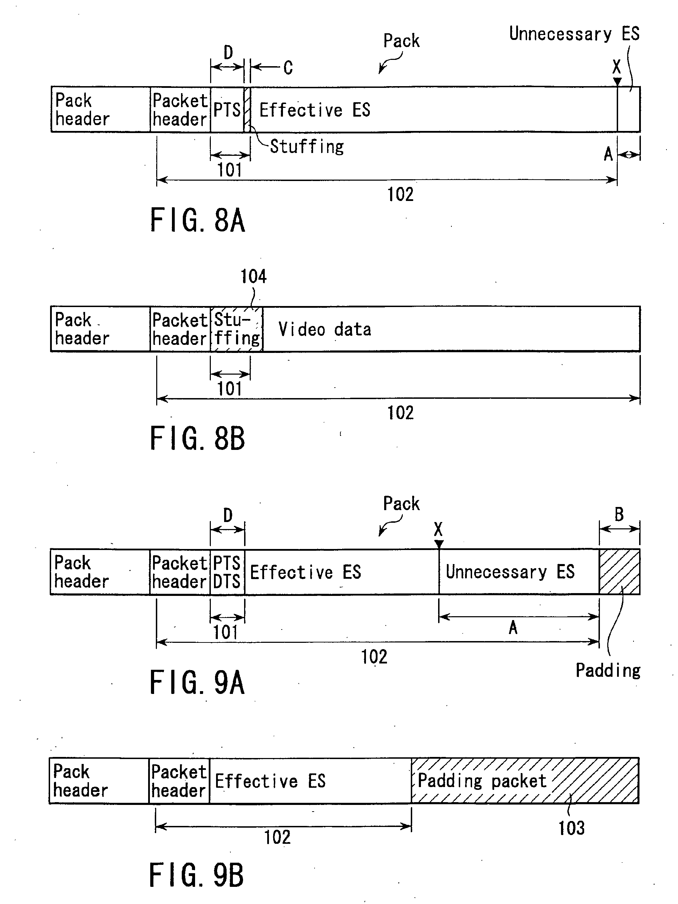

The editing operation according to the present invention will be described below. FIG. 6 is a flow chart showing the editing operation according to an embodiment of the present invention. FIG. 7 shows the relationship between packs and pictures. Each pack consists of 2-kbyte data.

The user inputs information of the end of a stream to be left in the editing process as an editing point (S1). For example, the editing point can be input by selecting one frame by fast forwarding or rewinding a video displayed on a display screen frame by frame. The editing apparatus shown in FIG. 1 (especially, the microcomputer block 30) determines the aforementioned reference picture (I- or P-picture) which has a playback time near the input frame (S2).

In step S3, a picture immediately before the reference picture determined in step S2 is determined as a picture corresponding to the editing point (an access unit is determined in case of audio). When the editing point is designated by a time like 36 min 24.2 sec from the beginning of a video program, the editing apparatus determines a picture immediately before the aforementioned reference picture, which has a playback time near the designated time, as the picture corresponding to the editing point. After the picture is determined, a pack that contains the last byte in intra-picture data is determined as a pack corresponding to the editing point (S4).

This pack may contain data of the next picture, as shown in FIG. 7, in addition to data of the picture of interest. However, since a picture after the picture of interest must be deleted, this pack must be edited. Also, since subsequent packs are unnecessary, they can be deleted. The editing apparatus must update management information upon deletion.

The editing method of the pack corresponding to the editing point in step S5 will be explained first. Upon editing a pack, stuffing or padding is done. FIGS. 8A and 8B show packs before and after stuffing, and FIGS. 9A and 9B show packs before and after padding. Stuffing is a process for moving unnecessary data like unnecessary ES in FIG. 8A to the packet header side as stuffing bytes (FFh) 104, as shown in FIG. 8B. Padding is a process for moving unnecessary data like unnecessary ES in FIG. 9A to a trailing part of the pack as a padding packet (FFh) 103.

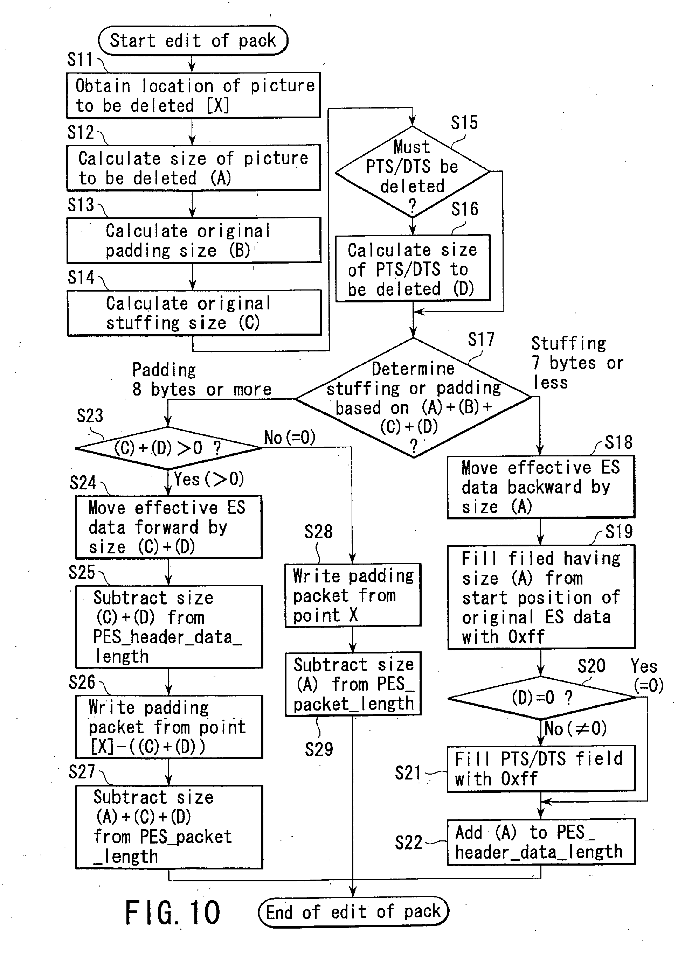

The pack editing method will be described below with reference to FIGS. 8A to 10. FIG. 10 is a flow chart showing the pack editing method.

The editing apparatus obtains start address X and size A of a picture (unnecessary ES in FIGS. 8A to 9B) to be deleted in that pack (S11, S12). It is then checked if that pack has undergone stuffing or padding. If that pack has undergone stuffing or padding, its size B or C is obtained (S13, ST14). For example, FIG. 8A shows a stuffed pack, and FIG. 9A shows a padded pack.

Furthermore, when a given picture is to be deleted, a PTS or DTS appended for the first byte of that picture to be deleted may become unnecessary. If a PTS or DTS becomes unnecessary, its size D is obtained (S15, S16). A total of sizes A + B + C + D obtained in steps S11 to S16 is the total data size which becomes unnecessary in that pack.

In step S17, either stuffing or padding is determined in correspondence with the total data size which becomes unnecessary. In the DVD standard, such unnecessary data is processed by stuffing or padding, and either stuffing or padding is determined in correspondence with the data size which becomes unnecessary. If the total data size which becomes unnecessary is 7 bytes or less, stuffing is selected; if it is 8 bytes or more, padding is selected.

Steps S18 to S22 show an algorithm when stuffing is selected. Since stuffing bytes are inserted after a PES packet header, an effective elementary stream ES must be moved backward. The moving distance corresponds to the size of data which becomes unnecessary (S18).

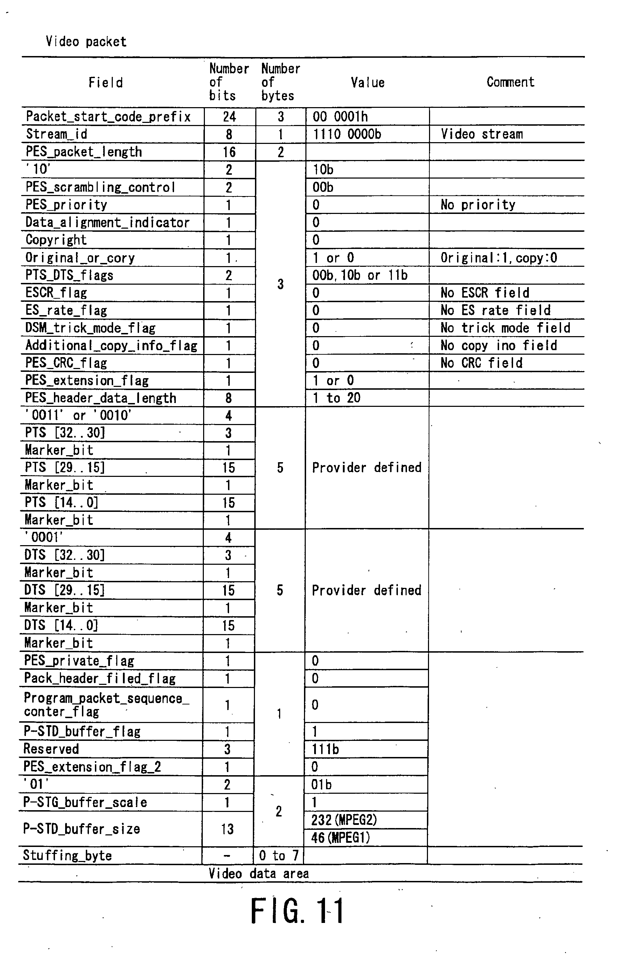

A free field formed by moving the elementary stream is filled with stuffing bytes (S19). If a PTS or DTS is deleted, that field is overwritten by stuffing bytes (S21). Finally, in step S22 the size of an elementary stream which becomes unnecessary to PES_header_data_length 101 to update fields (see FIG. 11).

Steps S23 to S29 show an algorithm when padding is selected. It is checked in step S23 if a source pack contains a stuffing field C or PTS/DTS field D. If an unnecessary PTS or DTS or stuffing bytes are present in a PES packet header (YES in step S23), these fields are moved to a padding packet. In such a case, these fields must be overwritten by moving an effective elementary stream toward the header side (S24).

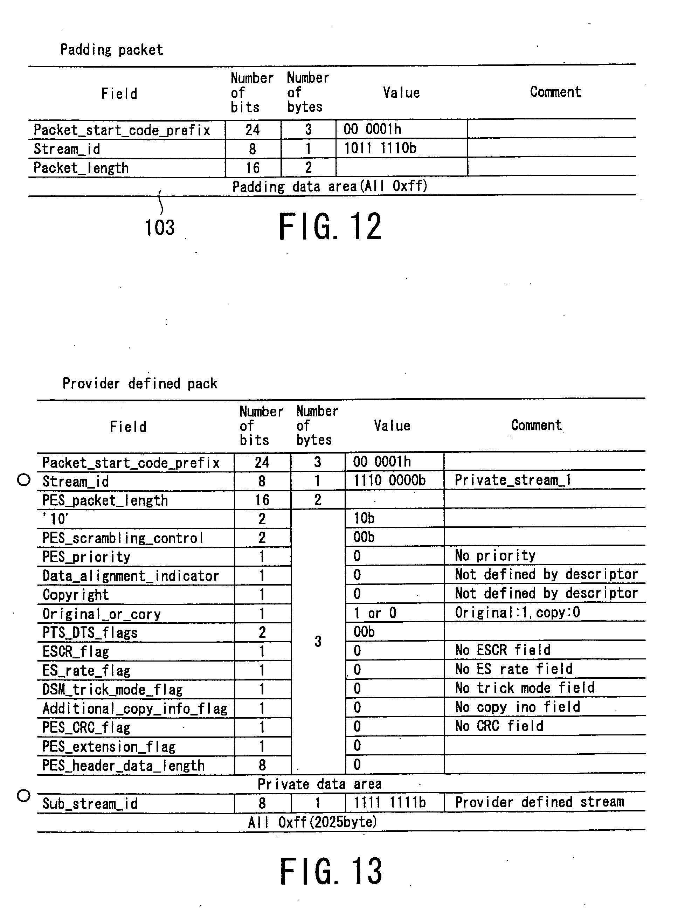

At this time, the size of unnecessary data is subtracted from PES_header_data_length 101 to update fields (S25). In step S26, a padding packet 103 is overwritten on a byte range from a byte immediately after the effective elementary stream to the last byte of that pack (see FIG. 12). In step S27, the number of new bytes, which become unnecessary, is subtracted from PES_packet_length 102 to update fields (see FIG. 11).

If NO in step S23, i.e., if neither PTS nor DTS is found or a PTS or DTS is to be left, a padding packet is overwritten on bytes after the editing point X, and size A of data to be deleted is subtracted from PES_packet_length 102 to update fields (S29). In this manner, the process of the pack corresponding to the editing point boundary is complete.

If other packs remain in the VOBU, they are unnecessary and must be deleted. As one method, these packs are deleted, and other packs may be moved toward the header side. As another method, unnecessary packs may be left as dummy packs. With this method, when a given video pack becomes unnecessary, and an audio pack follows that video pack and its address is referred to by management information, the management information need not be updated. As such a dummy pack, in the DVD-Video standard, a pack that does not influence the playback system can be generated using a pack which is set with stream ID = private_stream_1 and sub-stream ID = provider_defined_id.

Therefore, unnecessary packs can be replaced by these packs. In a replacement method, the value of only a pack header of the source pack is used, and the remaining field is filled with a fixed packet shown in FIG. 13. In this way, the process for a pack of a type to be processed is complete (S6). After the aforementioned process is done for video packs, other types of packs such as audio packs and the like can undergo the processes in steps S3 to S5 (S7). Finally, the management information must be updated as needed since the frames in the VOBU are deleted (S8).

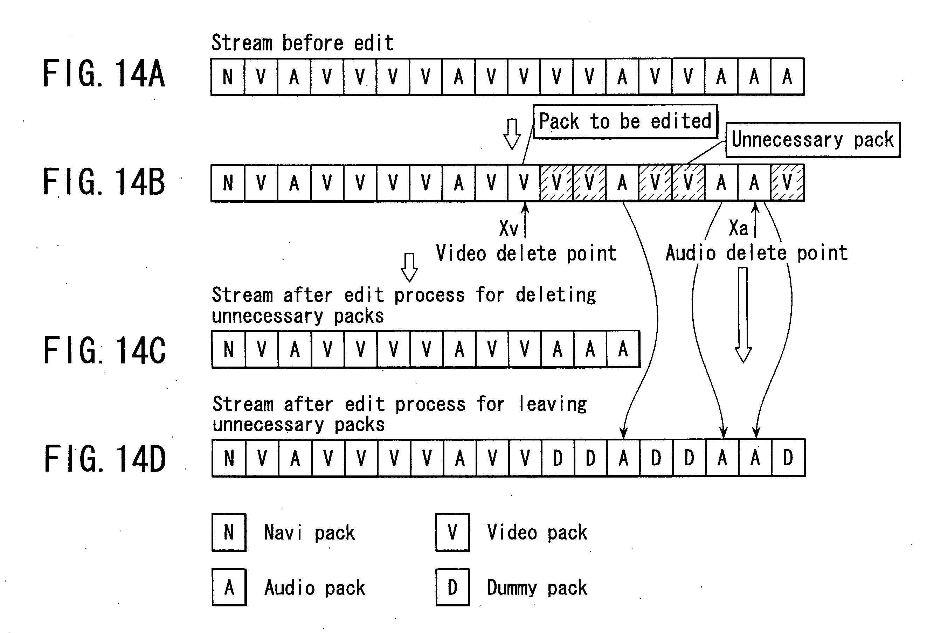

FIGS. 14A to 14D show the pack formats of streams before and after editing. In FIGS. 14A to 14D, N indicates a navigation pack; V, a video pack; A, an audio pack; and D, a dummy pack. FIG. 14A shows a stream before editing, and FIG. 14B shows a state after video and audio editable points Xv and Xa are determined in the stream shown in FIG. 14A. Hatched packs are unnecessary ones.

When the editable points are designated in this way, and when the editing process that deletes unnecessary packs is executed, a stream shown in FIG. 14C is obtained; when the editing process that leaves unnecessary packs is executed, the unnecessary packs are replaced by dummy packs, as shown in FIG. 14D.

As can be known to those who are skilled in the art, the aforementioned MPEG data editing method according to the present invention can be applied to editing processes of differently formatted data based on MPEG.

## Claims

1. An editing apparatus for editing video data recorded as a program stream, **characterized by** comprising:
an input unit (30, S1) configured to input information of an end of a stream to be left in an editing process;
a determination unit (30, S2) configured to determine a reference picture, which corresponds to the information of the end input by the input unit;
a judgment unit (30, S3) configured to judge a picture immediately before the reference picture determined by the determination unit as a last picture of the stream to be left; and
an editing unit (30, S5 - S8) configured to edit the video data using the judgment result of the judgment unit.

2. An apparatus according to claim 1, **characterized in that** the judgment unit (30, S3) judges an access unit of audio data corresponding to a picture immediately before the reference picture as a last access unit of the stream to be left.

3. An apparatus according to claim 1, **characterized by** further comprising:
a detection unit (30, S4) configured to detect a pack which contains a last byte of data in the picture, which is judged as the last picture by the judgment unit (30, S3), as a pack required to be edited; and
a processing unit (30, S17 - S27) configured to process a PTS or DTS by one of padding or stuffing, when the pack required to be edited which is detected by the detection unit, includes the PTS or DTS which becomes unnecessary.

4. An apparatus according to claim 1, **characterized by** further comprising:
a detection unit (30, S4) configured to detect a pack which contains a last byte of data in the picture, which is judged as the last picture by the judgment unit (30, S3), as a pack required to be edited; and
a processing unit (30, S17 - S27) configured to process MPEG data by one of padding or stuffing, when the pack required to be edited which is detected by the detection unit, includes the MPEG data which becomes unnecessary.

5. An apparatus according to claim 1, **characterized in that** the editing unit (30, S5 - S8) comprises a conversion unit (30, S6) configured to convert a pack, which becomes unnecessary as a result of the editing process, into data (D) that does not influence playback without changing a location of the pack.

6. An apparatus according to claim 5, **characterized in that** the conversion unit (30, S6) converts the unnecessary pack into a provider defined pack in the DVD-Video standard.

7. A method of editing video data recorded as a program stream, **characterized by** comprising the steps of:
inputting information of an end of a stream to be left in an editing process (S1);
determining a reference picture, which corresponds to the input information of the end (S2);
judging a picture immediately before the determined reference picture as a last picture of the stream to be left (S3); and
editing the video data using the judgment result in the judgment step (S5 - S8).
